# EUROPEAN PATENT APPLICATION

(11) **EP 4 510 275 A1**
(43) Date of publication of application: **19.02.2025**
(21) Application number: 23907799.3
(22) Date of filing: 21.12.2023
(51) Int. Cl.: H01M 10/0562, H01M 10/0565, H01M 10/052

(54) **ELECTRODE ASSEMBLY AND LITHIUM SECONDARY BATTERY COMPRISING SAME**

(30) Priority: 21.12.2022 KR 20220181062; 20.12.2023 KR 20230187353
(71) Applicant: LG Energy Solution, Ltd., Seoul 07335 (KR)
(72) Inventor: KIM, Hyosik, Daejeon 34122 (KR); KANG, Sungjoong, Daejeon 34122 (KR); KIM, Minkyung, Daejeon 34122 (KR); JUN, Youngjin, Daejeon 34122 (KR); JUNG, Hyeri, Daejeon 34122 (KR); SOON, Jiyong, Daejeon 34122 (KR); KIM, Dong Kyu, Daejeon 34122 (KR); KIM, Jinhyuk, Daejeon 34122 (KR)
(74) Representative: Goddar, Heinz J.
(86) International application number: PCT/KR2023/021240
(87) International publication number: WO 2024/136516

(57) **Abstract**

The present disclosure relates to an electrode assembly comprising: a positive electrode, a negative electrode, and a coating layer located between the positive electrode and the negative electrode,
wherein the coating layer includes (a) oxide-based solid electrolyte particles, and (b) one or more selected from the group consisting of polymer particles and ceramic particles.

## Description

### [TECHNICAL FIELD]

### Cross Citation with Related Application(s)

This application claims the benefit of Korean Patent Application No. 10-2022-0181062 filed on December 21, 2022 with the Korean Intellectual Property Office, the disclosure of which is incorporated herein by reference in its entirety.

The present disclosure relates to an electrode assembly, and a lithium secondary battery comprising the same.

### [BACKGROUND]

Recently, demand for high-capacity, high-output, long-life and high-stability lithium secondary batteries has been increased as an application area of lithium secondary batteries has rapidly expanded to power storage supply of large-area devices, such as automobiles and power storage devices, as well as electricity, electronics, communication, and power supply of electronic devices such as computers.

Generally, a lithium secondary battery includes a positive electrode, a negative electrode, a separator interposed between the positive electrode and the negative electrode, an organic solvent, and the like. Since the positive electrode can generate oxygen due to its unstable structure in a charged state, and there is a high danger of ignition when oxygen is generated, attempts have been made to research and develop a method capable of enhancing the safety of lithium secondary batteries.

A separator is used to ensure electrical insulation between a positive electrode and a negative electrode, and a thin film made of polyolefin is generally used. However, a polyolefin-based separator can easily shrink in high temperature environments and thus fail to insulate between a positive electrode and a negative electrode. When electrical insulation between the positive electrode and the negative electrode becomes impossible, a short circuit may occur, which may interact with oxygen generated by the unstable positive electrode to cause ignition. In other words, when a short circuit occurs in a charged lithium secondary battery in a high-temperature environment, there may be a problem that ignition of the lithium secondary battery occurs.

In addition, it is known that the electrolyte of a lithium secondary battery includes a highly volatile and flammable solvent, but there is a problem that ignition occurs easily.

In order to solve this problem, a flame retardant electrolyte containing a flame retardant solvent can be used, but there is a problem that such a flame retardant electrolyte is not well impregnated into a conventional separator. If the electrolyte is not well impregnated into the lithium secondary battery, the lithium ions cannot be transferred satisfactorily, which causes a problem that the capacity, output, and lifetime characteristics of the lithium secondary battery are all deteriorated. Furthermore, if the electrolyte is not well impregnated into the lithium secondary battery, there is a problem that a non-uniform reaction occurs between the electrode and the electrolyte, thereby generating dendrites and causing a short circuit.

Therefore, in order to solve these problems, attempts have been made to research and develop a method of increasing the stability while maintaining various performance characteristic of the lithium secondary battery.

### [DETAILED DESCRIPTION OF THE INVENTION]

### [Technical Problem]

Therefore, the present disclosure has been designed to solve the above-mentioned problems, and an object of the present disclosure is to provide an electrode assembly that not only has excellent high-temperature safety and thus prevents ignition, but also has high electrolyte impregnation property and thus is excellent in battery performance, and a lithium secondary battery comprising the same.

### [Technical Solution]

According to one embodiment of the present disclosure, there is provided an electrode assembly comprising:
a positive electrode, a negative electrode, and a coating layer located between the positive electrode and the negative electrode,
wherein the coating layer includes (a) oxide-based solid electrolyte particles, and (b) one or more selected from the group consisting of polymer particles and ceramic particles.

Wherein, the oxide-based solid electrolyte particles may include one, or two or more selected from the group consisting of LLTO-based compound, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compound, LATP-based compound, Li₁₊ₓTi₂₋ₓAlₓSi_{y}(PO₄)_{3-y} (wherein 0≤x≤1, 0≤y≤1), LiAlₓZr₂₋ₓ(PO₄)₃ (wherein 0≤x≤1), LiTiₓZr₂₋ₓ(PO₄)₃(wherein 0≤x≤1), LISICON-based compound, LIPON-based compound, Perovskite-based compound, Nasicon-based compound, LLZO-based compound, and LLZMO-based compound.

Further, the polymer particles and the ceramic particles may have an absolute value of zeta potential of 25 mV or more, respectively.

The polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

Further, the ceramic particles may include one or more selected from the group consisting of boehmite, Al₂O₃, TiO₂, Fe₂O₃, SiO₂, ZrO₂, Co₃O₄, SnO₂, NiO, ZnO, V₂O₅, and MnO.

At this time, the oxide-based solid electrolyte particles in the coating layer may be included in an amount of 10% by weight to 90% by weight based on the total weight of the coating layer.

Specifically, the coating layer may include (a) oxide-based solid electrolyte particles, and (b) polymer particles, wherein the polymer particles include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

That is, the coating layer may essentially comprise oxide-based solid electrolyte particles and polymer particles. Moreover, the coating layer may further comprise one or more additive selected from the group consisting of a binder and a dispersant.

Further, the coating layer may have a thickness of 3 micrometers to 30 micrometers.

Meanwhile, in one exemplary embodiment, the coating layer may be formed on the positive electrode or the negative electrode.

At this time, the electrode assembly further comprises a separator, wherein the separator may be located between the positive electrode and the coating layer, or between the negative electrode and the coating layer.

Alternatively, in another exemplary embodiment, the coating layer may comprise a first coating layer formed on the positive electrode and a second coating layer formed on the negative electrode.

At this time, the electrode assembly further comprises a separator, wherein the separator may be located between the first coating layer and the second coating layer.

Alternatively, in another exemplary embodiment, the electrode assembly further comprises a separator, and the coating layer may be formed on one side or both sides of the separator.

The separator may be an SRS separator having a structure in which an organic-inorganic mixed layer containing inorganic particles and a binding material is formed on one side or both sides of a base substrate.

According to another embodiment of the present disclosure, there is provided a lithium secondary battery comprising the electrode assembly, an electrolyte, and a battery case.

The electrolyte may be a flame retardant electrolyte that includes a flame retardant solvent and a lithium salt.

The flame retardant solvent may include one or more compound selected from a sulfone-based compound, a nitrile-based compound, a phosphoric acid-based compound, and a fluorine-substituted carbonate-based compound, and the lithium salt may include LiN(SO₂CF₃)₂.

### [BRIEF DESCRIPTION OF THE DRAWINGS]

FIG. 1 schematically shows an electrode assembly according to an embodiment of the present disclosure.
FIG. 2 schematically shows an electrode assembly according to another embodiment of the present disclosure.
FIG. 3 schematically shows an electrode assembly a further to another embodiment of the present disclosure.
FIG. 4 schematically shows an electrode assembly according to an additional embodiment of the present disclosure.
FIG. 5 schematically shows an electrode assembly according to further embodiment of the present disclosure.
FIG. 6 schematically shows an electrode assembly according to another embodiment of the present disclosure.

### [DETAILED DESCRIPTION OF THE EMBODIMENTS]

Hereinafter, terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

Unless defined otherwise, all terms (including technical and scientific terms) used in the present specification may be used as meanings that can be commonly understood by those of ordinary skill in the art to which the present invention belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" used herein does not exclude the existence or the addition of one or more elements other than those mentioned.

Throughout the specification, unless explicitly described to the contrary, the word "comprise" and variations such as "comprises" or "comprising" will be understood to imply the inclusion of stated elements but not the exclusion of any other elements.

As used herein, the " ζ potential (zeta potential)" is the index indicating the degree of surface charge amount of the particles. The zeta potential of particles in the present invention can be measured, for example, by an electrophoretic light scattering method using a dynamic light scattering device. Specifically, the zeta potential value of the polymer particles or ceramic particles included in the coating layer in the present disclosure can be measured by an electrophoretic light scattering method using a dynamic light scattering equipment. As an example, the zeta potential value can be measured after dispersing polymer particles or ceramic particles in a solvent such as water or alcohol without a dispersant.

Hereinafter, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time of filing the present application

According to embodiments of the present disclosure, there is provided an electrode assembly comprising:
a positive electrode, a negative electrode, and a coating layer located between the positive electrode and the negative electrode,
wherein the coating layer includes (a) oxide-based solid electrolyte particles, and (b) one or more selected from the group consisting of polymer particles and ceramic particles.

### <Coating Layer>

The oxide-based solid electrolyte particles may include one, or two or more selected from the group consisting of LLTO-based compound, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compound, LATP-based compound, Li₁₊ₓTi₂₋ₓAlₓSi_{y}(PO₄)_{3-y} (wherein 0≤x≤1, 0≤y≤1), LiAlₓZr₂₋ₓ(PO₄)₃ (wherein 0≤x≤1), LiTiₓZr₂₋ₓ(PO₄)₃(wherein 0≤x≤1), LISICON-based compound, LIPON-based compound, Perovskite-based compound, Nasicon-based compound, LLZO-based compound, and LLZMO-based compound, without being not limited thereto, but specifically, may be LATP-based compound.

Wherein, the LLTO-based compound may be a compound including Li, La, Ti, O, specifically Li₃ₓLa_{(2/3-x)}TiO₂. The LAGP-based compound may be a compound including Li, Al, Ge, P, O, specifically Li₁₊ₓAlₓGe₂₋ₓ(PO₄)₃ (wherein 0≤x≤1), and the LATP-based compound may be a compound including Li, Al, Ti, P, and O, specifically Li₁₊ₓAlₓTi₂₋ₓ(PO₄)₃ (wherein 0≤x≤1). Further, the LIPON-based compound may be a compound including Li, P, O, N, and the LLZO-based compound may be a compound including Li, La, Zr, O, specifically Li₇La₃Zr₂O₁₂, and the LLZMO-based compound may be a compound including Li, La, Zr, O, M=Nb or Ta, specifically Li₇₋ₓLa₃Zr₂₋ₓMₓO₁₂ (wherein, 0≤x≤1).

When the oxide-based solid electrolyte particles are included in the coating layer, resistance can be reduced due to the affinity of the oxide-based solid electrolyte particles themselves with the electrolyte, which is thus preferable.

The average diameter(D50) of the oxide-based solid electrolyte particles may be 50 nanometers to 10 micrometers, specifically 50 nanometers to 5 micrometers, more specifically, 50 nanometers to 1 micrometer.

If the average diameter is outside the above range and is too small, aggregation between particles may occur due to a decrease in the dispersibility. Conversely, if the average diameter is too large, the pores of the coating layer may be formed too large and lithium dendrites may be easily formed through the pores, which is thus not preferable.

The oxide-based solid electrolyte particles may be included in an amount of 10% by weight to 90% by weight, specifically 10% by weight to 80% by weight, and more specifically 10 to 60% by weight, based on the total weight of the coating layer.

When the average diameter satisfies the above range, the lithium ion conductivity in the coating layer can be increased to thereby reduce resistance and exhibit improved secondary battery performance.

The polymer particles may be particles having a surface charge. Alternatively, the polymer particles may include both particles with surface charge and particles without surface charge. The surface charge may show on the particles themselves, or may be formed by physical or chemical surface treatment

Herein, the absolute value of the zeta potential of the polymer particles may be 25 mV or more, specifically 35 mV or more, and more specifically 45 mV or more. When the absolute value of the zeta potential satisfies the above range, the flame retardant electrolyte can be easily impregnated into the coating layer even when applying a flame retardant electrolyte to a lithium secondary battery containing the electrode according to the present disclosure, so that a uniform reaction can occur throughout the electrode, and thus, performance charactreristics such as capacity, output, and life characteristics of the lithium secondary battery can be improved.

Specifically, the polymer particles may include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate, but are not limited thereto. The polymer particles are distinguished from binders that bind constituent elements, but are not limited thereto as long as they are a material that can be used as polymer-based solid electrolyte particles. Specifically, the polymer particles may include polymethyl methacrylate.

The average diameter(D50) of the polymer particles may be 50 nanometers to 3 micrometers, specifically 50 nanometers to 2 micrometers, more specifically 50 nanometers to 1.5 micrometer.

When the average diameter(D50) of the polymer particles satisfies the above numerical range, the dispersibility of particles contained in the coating layer is improved, and pores of appropriate size are uniformly formed in the coating layer, thereby improving the mobility of lithium ions. On the other hand, when the average diameter(D50) of the polymer particles is smaller than 50 nanometers, aggregation between particles occurs due to a decrease in the dispersibility of the particles, and the pores are clogged by the aggregated particles, thereby capable of reducing the mobility of lithium ions and increasing resistance. If the average diameter (D50) of the polymer particles is greater than 3 micrometers, there is a problem that a lithium dendrite growth path may be formed, as described above.

The absolute value of the zeta potential of the ceramic particles may be 25 mV or more, specifically 35 mV or more, and more specifically 45 mV or more. When the absolute value of the zeta potential satisfies the above range, the flame retardant electrolyte can be easily impregnated into the coating layer even when applying a flame retardant electrolyte to a lithium secondary battery containing the electrode according to the present disclosure, so that a uniform reaction can occur throughout the electrode, and thus, performance characteristic such as capacity, output, and life characteristics of the lithium secondary battery can be improved.

The ceramic particles may include, specifically, one or more selected from the group consisting of boehmite, Al₂O₃, TiO₂, Fe₂O₃, SiO₂, ZrO₂, Co₃O₄, SnO₂, NiO, ZnO, V₂O₅, and MnO, without being limited thereto, and specifically, may include boehmite.

The average diameter(D50) of the ceramic particles may be 30 nanometers to 5 micrometers, specifically 50 nanometers to 3 micrometers, more specifically 50 nanometers to 1 micrometer.

When the average particle diameter D₅₀ of the ceramic particles is smaller, aggregation between particles occurs due to a decrease in the dispersibility of the particles, and if the average diameter is larger, there is a problem that a lithium dendrite growth path may be formed.

As used herein, the average particle diameter D₅₀ means a particle size at which cumulative volumes of particles reach 50% in the particle size distribution curve of the particles. The D₅₀ can be measured using, for example, a laser diffraction method. The laser diffraction method can generally measure particle sizes ranging from a submicron range to several millimeters, and can obtain results with high reproducibility and high resolvability.

The polymer particles or the ceramic particles may be included individually or together.

More specifically, the coating layer may include polymer particles together with the oxide-based solid electrolyte particles. That is, the oxide-based solid electrolyte particles and polymer particles can essentially be included. In this case, lithium ion transfer performance is improved.

When both the polymer particles and the ceramic particles are included in the coating layer, the mixing ratio of the polymer particles and the ceramic particles may be 3:7 to 7:3, specifically 4:6 to 6:4, based on weight.

When the mixing ratio satisfies the above range, it is possible to prevent deterioration of pore uniformity, heat resistance, and electrolyte impregnation property in the coating layer.

The coating layer may further comprise one or more additive selected from the group consisting of a binder and a dispersant.

Meanwhile, the dispersant suppresses a phenomenon in which the polymer particles are excessively aggregated in the coating layer, and enables the polymer particles to be effectively dispersed and present in the coating layer.

The dispersant may include a hydrogenated nitrile-based polymer. Specifically, the dispersant may be a hydrogenated nitrile-based copolymer, and more specifically, a hydrogenated nitrile butadiene rubber(H-NBR).

The hydrogenated nitrile-based copolymer may be a copolymer containing a structural unit derived from α,β-unsaturated nitrile and a structural unit derived from a hydrogenated conjugated diene, or may be a copolymer containing a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, or the like may be used, and any one alone or a mixture of two or more thereof may be used. As the conjugated diene-based monomer, for example, conjugated diene-based monomers having 4 to 6 carbon atoms such as 1,3-butadiene, isoprene, or 2,3-methyl butadiene may be used, and any one alone or a mixture of two or more thereof may be used.

The dispersant may be included in an amount of 1% by weight to 20% by weight, specifically 1% by weight to 15% by weight, and more specifically 1% by weight to 10% by weight, based on the total weight of the coating layer. When the content of the dispersant satisfies the above range, the dispersibility of the particles contained in the coating layer is improved and pores are uniformly formed in the coating layer, so that cracks on the surface of the coating layer can be remarkably reduced.

The binder serves to improve adhesive force between the particles of the coating layer and the electrode and separator.

Examples of the binder may include one or more selected from the group consisting of polyvinylidene fluoride (PVDF), polyvinyl alcohol(PVA), carboxymethylcellulose(CMC), starch, hydroxypropyl cellulose, regenerated cellulose, polyvinylpyrrolidone(PVP), polytetrafluoroethylene, polyethylene, polypropylene, ethylene-propylene-diene monomer, sulfonated ethylene-propylene-diene monomer, styrene-butadiene rubber, and fluoro rubber. Specifically, the binder may include polyvinylidene fluoride.

The binder may be contained in an amount of 0.1% by weight to 20% by weight, specifically 0.5% by weight to 15% by weight, and more specifically 1% by weight to 10% by weight, based on the total weight of the coating layer. When the content of the binder is outside the above range and is too small, the effect of improving adhesive force cannot be expected. When the content of the binder is too large, the content of other particles is relatively reduced, which is not preferable.

The coating layer having a configuration as described above may have electrical insulating properties. In this case, the coating layer may correspond to a porous insulating layer, but is not limited thereto.

The coating layer has a property that does not easily shrink even at high temperatures. Therefore, when applying a coating layer to an electrode assembly, a short circuit between the positive electrode and the negative electrode can be prevented even in a high-temperature environment, thereby improving high-temperature safety of the lithium secondary battery.

### <Electrode Assembly>

Hereinafter, electrode assemblies of various structures will be described with reference to the drawings.

In one example, the coating layer may be formed on the positive electrode, or on the negative electrode.

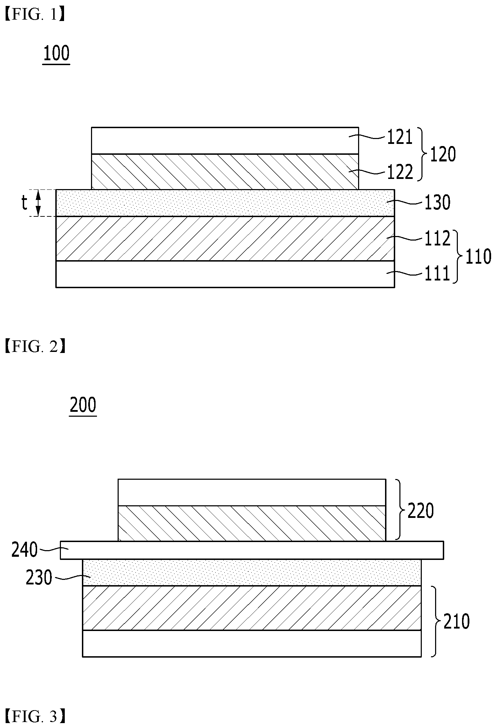

FIGS. 1 to 3 show the configuration in which the coating layer is formed on either one side of the positive electrode or the negative electrode.

Specifically, FIG. 1 schematically shows an electrode assembly having a structure in which two or more coating layers are formed on the negative electrode instead of a separator, FIG. 2 schematically shows an electrode assembly having a structure in which the coating layer is formed on the negative electrode and a separator is interposed between the coating layer and the positive electrode. FIG. 3 schematically shows an electrode assembly having a structure in which the coating layer is formed on the positive electrode, and a separator is interposed between the coating layer and the negative electrode.

First, referring to FIG. 1, the electrode assembly 100 according to an embodiment of the present disclosure includes a negative electrode 110, a positive electrode 120, and a coating layer 130.

The negative electrode 110 has a structure in which a negative electrode active material layer 112 is formed on a negative electrode current collector 111. Here, the negative electrode active material layer includes electrode materials such as a negative electrode active material, a conductive material, and a binder. Alternatively, although not shown in the figure, the negative electrode may be a graphite electrode made of carbon (C), or may be metal itself.

The negative electrode current collector 111 is not particularly limited as long as it has high conductivity without causing a chemical change in the battery, and, for example, copper, stainless steel, aluminum, nickel, titanium, calcinated carbon, copper or stainless steel that is surface-treated with one of carbon, nickel, titanium, silver, or the like, an aluminum-cadmium alloy, or the like may be used.

The negative electrode collector 111 may generally have a thickness of 3 *µ*m to 500 *µ*m. Also, similar to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material may comprise one or more selected from the group consisting of lithium metal, a carbon material capable of reversibly intercalating/deintercalating lithium ions, metals or alloys of lithium and these metals, a metal composite oxide, a material which may be doped and undoped with lithium, and a transition metal oxide.

As the carbon material capable of reversibly intercalating/deintercalating lithium ions, any carbon material may be used without particular limitation so long as it is a carbon-based negative electrode active material generally used in a lithium ion secondary battery, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, and fired cokes.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LixFe₂O₃(0 ≤ x ≤ 1), LiₓWO₂(0 ≤ x ≤ 1) and SnₓMe₁₋ₓMe'_{y}O_{z} (Me: Mn, Fe, Pb, Ge; Me': Al, B, P, Si, Groups I, II and III elements of the periodic table, or halogen; 0<x≤1; 1≤y≤3; 1≤z≤8) can be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and one or more thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include lithium-containing titanium composite oxide (LTO), vanadium oxide, lithium vanadium oxide, and the like.

The negative electrode active material may be contained in an amount of 60 to 99% by weight, preferably 70 to 99% by weight, and more preferably 80 to 98% by weight, based on a total weight of the negative electrode active material layer.

The conductive material is a component that further improves the conductivity of the negative electrode active material. Such a conductive material is not particularly limited as long as it has conductivity without causing a chemical change in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or polyphenylene derivatives, may be used.

The conductive material may be contained in an amount of 0.1 to 10% by weight, specifically 0.5 to 5% by weight, and more specifically 0.5 to 3% by weight, based on the total weight of the negative electrode active material layer.

The binder is a component that assists in the binding between the conductive material, the negative electrode active material and the negative electrode current collector. Examples of the binder may include polyvinylidene fluoride(PVDF), polyvinyl alcohol, starch, carboxymethylcellulose(CMC), starch, hydroxypropyl cellulose, regenerated cellulose, polyvinylpyrrolidone, polyethylene, polypropylene, ethylene-propylene-diene monomer, and a sulfonated ethylene-propylene-diene monomer, a styrene-butadiene rubber, a fluoro rubber, various copolymers thereof, and the like.

Typically, the binder may be contained in an amount of 0.5 to 10% by weight, specifically 0.5 to 5% by weight, and more specifically 0.5 to 3% by weight based on the total weight of the negative electrode active material layer.

When the metal itself is used without forming a negative electrode active material layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium(Li), nickel(Ni), tin(Sn), copper(Cu), and indium(In), or an alloy of two types thereof.

The positive electrode 120 has a structure in which the positive electrode active material layer 122 is formed on the positive electrode current collector 121. Here, the positive electrode active material layer includes electrode materials such as a positive electrode active material, a conductive material, and a binder.

The positive electrode current collector 121 is not particularly limited as long as it has high conductivity without causing a chemical change in the battery, and, for example, stainless steel, aluminum, nickel, titanium, calcinated carbon, or aluminum or stainless steel of which surface is treated with carbon, nickel, titanium, silver, or the like can be used as the current collector.

The positive electrode current collector 121 may generally have a thickness of 3 *µ*m to 500 *µ*m, and the positive electrode current collector may have fine protrusions and depressions formed on an entire surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material may be a compound capable of reversibly intercalating and deintercalating lithium, and specifically, it may include lithium metal oxide containing lithium and one or more metal such as cobalt, manganese, nickel or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is one or more selected from Al, Mg, and Ti, X is one or more selected from F, S and N, -0.5≤a≤0.5, 0≤x≤0.5, 0≤b≤0.1), or the like, and any one thereof or a compound of two or more thereof may be used.

Among these compounds, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), or lithium iron phosphate (e.g., LiFePO₄) or the like, and any one alone or a mixture of two or more thereof may be used.

The positive electrode active material may be contained in an amount of 60 to 99% by weight, preferably 70 to 99% by weight, and more preferably 80 to 98% by weight based on the total weight of the positive electrode active material layer.

The description of the conductive material and binder is the same as that of the negative electrode active material layer.

Meanwhile, the coating layer 130 is formed between the positive electrode 120 and the negative electrode 110.

At this time, the thickness(t) of the coating layer 130 may be 3 micrometers to 30 micrometers, specifically 5 micrometers to 20 micrometers, and more specifically, 5 micrometers to 15 micrometers. If the thickness is outside the above range and is too thin, the effect intended by the present application cannot be obtained, and the physical insulation between the positive electrode 120 and the negative electrode 110 cannot be sufficiently ensured. If the thickness is too thick, resistance may increase, which is not preferable.

The thickness (t) of the coating layer 130 can be easily measured using a thickness gauge or a cross-sectional SEM photograph.

Further, the area of the coating layer 130 may be formed to have a width that can wholly insulate the positive electrode 120 and the negative electrode 110. Specifically, when the negative electrode 110 is larger than the positive electrode 120, it is not limited as long as it has an area equal to or larger than the positive electrode 120. However, for ease of manufacturing process, the coating layer 130 may be formed to have an area corresponding to the entire area of the object to be coated.

FIG. 1 discloses, as an example, a structure in which a coating layer 130 is formed on a negative electrode 110, and thus, the coating layer 130 may be formed to have an area corresponding to the negative electrode 110. Specifically, the coating layer 130 can be formed, as an example, by coating a composition for forming a coating layer on the negative electrode 110 and drying it. Alternatively, the coating layer is formed as a free-standing film and attached to the negative electrode 110, or it may be formed by a method of coating and drying the composition for forming a coating layer on a substrate and then transferring it onto the negative electrode 110, and the method is not limited. In the following, a method of forming form the coating layer by coating and drying the composition for forming the coating layer on an electrode or separator will be described, but it goes without saying that the method is not limited thereto, and can be formed by various methods.

Although not shown in the figure, it goes without saying that the coating layer can be formed to have an area corresponding to the positive electrode by coating and drying the composition for forming a coating layer on the positive electrode.

In FIG. 1, the coating layer 130 also performs the role of electrical insulation instead of the separator.

Meanwhile, referring to FIGS. 2 and 3, in another exemplary embodiment, the electrode assembly has a structure that further includes a separator. Otherewise, the structure is as shown in FIG. 1.

Specifically, referring to FIG. 2, the electrode assembly 200 includes a coating layer 230 between the positive electrode 220 and the negative electrode 210, and a separator 240 between the coating layer 230 and the positive electrode 220.

As an example, the coating layer 230 is formed by coating and drying a composition for forming a coating layer on the negative electrode 210, and thus, can be formed with an area corresponding to the negative electrode 210, and the separator 240 is interposed between the coating layer 230 and the positive electrode 220.

Here, the separator can be used without particular limitation as long as it is typically used as a separator in a lithium secondary battery. Particularly, a separator having high moisture-retention ability for an electrolyte as well as low resistance to the movement of electrolyte ions is preferable.

For example, as the separator, a porous polymer film produced using a polyolefin-based polymer such as an ethylene homopolymer, a propylene homopolymer, an ethylene/butene copolymer, or a laminated structure having two or more layers thereof may be used. Also, a typical porous non-woven fabric, for example, a non-woven fabric formed of glass fiber having a high melting point, polyethylene terephthalate fiber, or the like can be used as the separator.

Alternatively, it may be an SRS (Safety Reinforced Separator) separator having a structure in which an organic-inorganic mixed layer containing inorganic particles and a binding material is formed on one side or both sides of the base substrate.

Specifically, the base substrate of the SRS separator may be a porous polymer film containing the polyolefin-based polymer.

The inorganic particles enable empty spaces to form therebetween and thus play role of a spacer that forms micropores and keeps a physical shape as well. Because the inorganic particles generally have a characteristic that does not change physical property even at a temperature as high as 200°C or above, the formed organic/inorganic composite porous film has excellent thermal resistance.

The inorganic particle is not particularly limited as long as they are stable electrochemically. That is, the inorganic particle that can be used in the present disclosure is not particularly limited if an oxidization and/or a reduction reaction does not occur in an operating voltage range of a battery in use. **In** particular, since the inorganic particles having an ion transfer ability can increase the ion conductivity and facilitate performance enhancement within the electrochemical device, the inorganic particles with higher ion conductivity are preferred. Further, when the inorganic particles have a high density, they raise a problem of weight increase of a manufactured battery as well as difficulty with dispersion during manufacturing. Therefore, the inorganic particles with a lower density may be preferred. Further, the inorganic particles having a high dielectric constant may contribute to an increased dissociation of the electrolyte salt (e.g., lithium salt) within liquid electrolyte, thereby enhancing ion conductivity of the electrolyte. Finally, inorganic particles having thermal conductivity are therefore more preferable because they have excellent heat absorption ability, and heat is locally concentrated to form heat generating points, thereby suppressing phenomena that lead to thermal runaway.

Due to the aforementioned reasons, the inorganic particles may be preferably one or more type selected from the group consisting of (a) inorganic particles of a high dielectric constant, of which the dielectric constant is 1 or more, 5 or more, preferably 10 or more, (b) inorganic particles having piezoelectricity, (c) thermally conductive inorganic particles and (d) inorganic particles having a lithium ion transfer ability.

The piezoelectric inorganic particles refer to a material which is nonconducting under a normal pressure, but exhibits electrically conducting property when internal structure changes under a certain pressure exerted thereto. It is a material that has not only a high dielectric characteristic such as a dielectric constant of 100 or more, but also a function of generating electric potential between both surfaces when one surface is charged positive and the opposite surface is charged negative with charges generated when the piezoelectric material is tensioned or compressed by a certain pressure exerted thereto.

Examples of the inorganic particle having piezoelectricity may include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (H_{f}O₂) or a mixture thereof, but not limited hereto.

The "inorganic particle having a lithium ion transfer ability" refer to inorganic particles that contain lithium atoms, but have an ability to move the lithium ions without storing lithium. Because the inorganic particles having a lithium ion transfer ability can deliver and migrate lithium ions because of a kind of defect present within the particle structure, it is possible to prevent a decrease in lithium mobility and thus prevent a decrease in battery capacity.

Examples of the inorganic particle having a lithium ion transfer ability may be lithium phosphate(Li₃PO₄), lithium titanium phosphate(LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass such as 14Li₂O-9Al₂O₃-38TiO₂-39P₂O₅ (0<x<4, 0<y<13), lithium lanthanum titanate (LixLayTiO₃, 0<x<2, 0<y<3), lithium germanium thiophosphate such as Li_{3.25}Ge_{0.25}P_{0.75}S₄ (LiₓGe_{y}P_{z}S_{w}, 0<x<4, 0<y<1, 0<z<1, 0<w<5), lithium nitride such as Li₃N (LiₓN_{y}, 0<x<4, 0<y<2), SiS₂-based glass such as Li₃PO₄-Li₂S-SiS₂ (LiₓSi_{y}S_{z}, 0<x<3, 0<y<2, 0<z<4), P₂S₅-based glass such as LiI-Li₂S-P₂S₅ (LiₓP_{y}S_{z}, 0<x<3, 0<y<3, 0<z<7), or a mixture thereof, but not limited hereto.

Further, examples of the inorganic particles having the dielectric constant of 1 or more may be SrTiO₃, SnO₂, CeO₂, MgO, NiO, CaO, ZnO, ZrO₂, Y₂O₃, Al₂O₃, TiO₂, SiC or a mixture thereof, but not limited hereto.

The thermally conductive inorganic particles are materials having insulating properties that provide low thermal resistance but not electrical conductivity, for example, one or more selected from the group consisting of aluminum nitride(AlN), boron nitride(BN), alumina(Al₂O₃), silicon carbide(SiC), and beryllium oxide(BeO), but not limited thereto.

When the above-mentioned high dielectric inorganic particles, inorganic particles having piezoelectricity, and inorganic particles having a lithium ion transfer ability are used in combination, synergistic effects of these can be doubled.

The size of the inorganic particle is not limited, but to ensure appropriate porosity between the inorganic particles, the preferable size is within the range of 0.001 to 10 *µ*m if possible. When the size is less than 0.001 *µ*m, dispersion deteriorates, and physical properties are difficult to adjust. When the size is greater than 10 *µ*m, a thickness increases, and mechanical property deteriorates. Further, because of an excessively large pore size, the role of a coating layer is not sufficiently performed, and possibility in which internal short occurs at charging and discharging of the battery is increased

The content of the inorganic particles is not particularly limited, but is preferably in the range of 1 to 99% by weight, especially 10 to 95% by weight, based on 100% by weight of the mixture of the inorganic particles and the binding material. If the content of the inorganic particles is less than 1% by weight, the content of the binding material may be too high and the pore size and porosity reduce due to a decrease in the empty space formed between inorganic particles, thereby reducing the mobility of lithium ions. On the other hand, when the content exceeds 99% by weight, the content of the binding material is too small, so the adhesive force between inorganic substances becomes weak and the mechanical properties of the coating layer deteriorate.

Meanwhile, the binding material is not limited as long as it does not cause a side reaction with the electrolyte solution, but in particular, a binding material with a glass transition temperature(Tg) as low as possible can be used, and the temperature is preferably in the range of -200 to 200°C. This is because the mechanical properties of the final insulating film can be improved.

Further, the binding material does not necessarily have to have ion conduction ability, but it is more preferable to use a polymer having ion conduction ability.

Therefore, the binding material preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer can be 1 or more, specifically in the range of 1.0 to 100 (measurement frequency = 1 kHz), and is particularly preferably 10 or more.

In addition to the above-mentioned functions, the binding material may have characteristic which can represent a high degree of swelling of the electrolyte by gelation when being impregnated into the liquid electrolyte. When the binding material has practically excellent degree of swelling of the electrolyte (or impregnation ratio), the electrolyte injected after the battery is assembled may permeates into the above polymer, and the polymer containing the absorbed electrolyte has an electrolyte ion conducting ability. Therefore, if possible, a polymer with a solubility parameter of 15 to 45 MPa^{1/2} is preferred, and the ranges of 15 to 25 MPa^{1/2} and 30 to 45 MPa^{1/2} are more preferred. When the solubility parameter is less than 15 MPa^{1/2} and more than 45 MPa^{1/2}, it becomes difficult to be impregnate by a typical liquid electrolyte for batteries.

Examples of the binding material include one or more selected from the group consisting of polyvinylidene fluorideco-hexafluoropropylene, polyvinylidene fluoride-cotrichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The total thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve lifetime characteristics.

Referring to FIG. 3, an electrode assembly 300 having a structure which includes a coating layer 330 between the positive electrode 320 and the negative electrode 310 and includes a separator 340 between the coating layer 330 and the negative electrode 310 is illustrated.

Since the coating layer 330 is formed by coating the composition for forming a coating layer on the positive electrode 320 and drying it, it can be formed to have an area corresponding to the positive electrode 320, and the separator 340 is interposed between the coating layer 330 and the negative electrode 310.

The description regarding the separator 340 is the same as described above.

In another exemplary embodiment, the coating layer may be formed on both the positive electrode and the negative electrode. In other words, the coating layer may be composed of a first coating layer formed on the positive electrode and a second coating layer formed on the negative electrode.

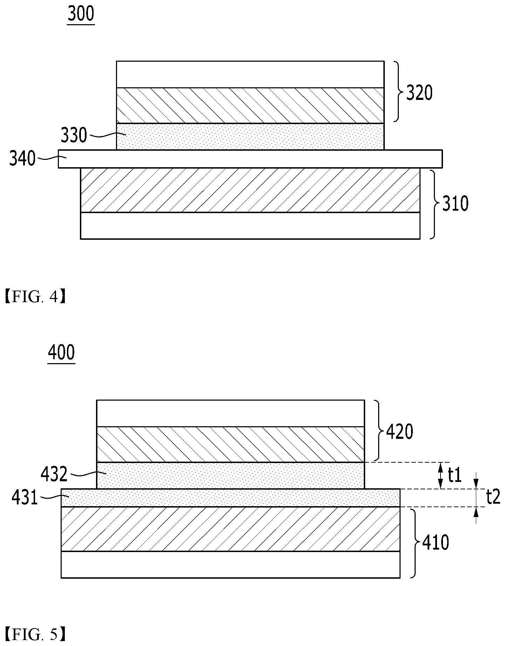

FIGS. 4 and 5 disclose a configuration in which the coating layer is formed on both the positive electrode and the negative electrode.

Specifically, FIG. 4 schematically shows an electrode assembly in which the coating layer is formed on the positive electrode and the negative electrode instead of the separator. FIG. 5 schematically shows an electrode assembly having a structure in which a separator is interposed between the coating layers.

Referring to FIG. 4, the electrode assembly 400 has a structure formed such that the coating layer 431 formed on the negative electrode 410 and the coating layer 432 formed on the positive electrode 420 come into contact with each other.

That is, the coating layers 431 and 432 are located between the negative electrode 410 and the positive electrode 420 instead of a separator, and the coating layers 431 and 432 performs the role of electrical insulation.

Here, the coating layer 431 is formed by coating and drying the composition for forming a coating layer on the negative electrode 410 and drying it, and thus may have an area corresponding to the negative electrode 410, and the coating layer 432 is formed by coating the composition for forming a coating layer on the positive electrode 420 and drying it, and thus may have an area corresponding to the positive electrode 420.

Meanwhile, when forming on both electrodes like this, the thicknesses t₂ and t₁ of the coating layers 431 and 432 may be 3 micrometers to 30 micrometers, respectively, and specifically, the thicknesses may be 5 micrometers to 20 micrometers, and more specifically, 5 micrometers to 15 micrometers.

Further, the total thicknesses (t₁+t₂) thereof may be 10 micrometers to 50 micrometers, specifically 10 micrometers to 30 micrometers.

Meanwhile, referring to FIG. 5, in another example, the electrode assembly 500 has a structure that further includes a separator 540 in the structure as shown in FIG. 4.

Specifically, referring to FIG. 5, the electrode assembly 500 is structured so as to form the coating layers 531 and 532 on the negative electrode 510 and the positive electrode 520, respectively, and include a separator 540 between the coating layers 531 and 532.

As explained above, the coating layer 531 is manufactured by coating the composition for forming a coating layer on the negative electrode 510 and drying it, and thus, can be formed to have an area corresponding to the negative electrode 510, and the coating layer 532 is manufactured by coating the composition for forming a coating layer on the positive electrode 520 and drying it, and thus, may be formed to have an area corresponding to the positive electrode 520.

The separator 540 is as described above.

In another example, the electrode assembly may include a separator, and the coating layer may have a structure that is formed on one side or both sides of the separator.

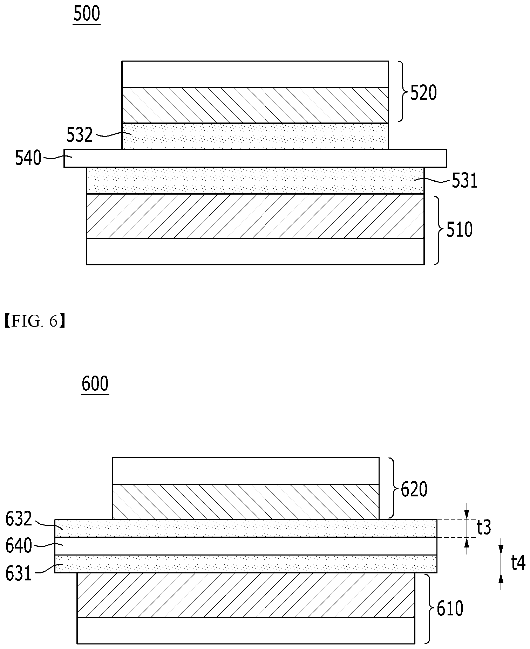

FIG. 6 discloses a configuration in which the coating layer is formed on a separator.

Specifically, referring to FIG. 6, the coating layers 631 and 632 are located between the negative electrode 610 and the positive electrode 620, and the coating layers 631 and 632 are formed on both sides of the separator 640. Although not shown in the figure, it goes without saying that it may be formed only on one side of the separator, for example, the side facing the positive electrode 620 or the side facing the negative electrode 610.

The coating layers 631 and 632 are formed by coating the composition for forming a coating layer on both sides of the separator 640 and drying it, and thus, may be formed to have an area corresponding to the area of the separator 640.

When the coating layers 631 and 632 are formed on both sides of the separator 640 in this way, the thicknesses t₄ and t₃ thereof may be 2 micrometers to 30 micrometers, respectively. Specifically, the thicknesses may be 2 micrometers to 15 micrometers, and more specifically 2 micrometers to 10 micrometers.

Further, the total thicknesses t₃+t₄ thereof may be 4 micrometers to 50 micrometers, specifically 4 micrometers to 20 micrometers.

### <Lithium Secondary Battery>

Next, the lithium secondary battery according to the present disclosure will be described.

The lithium secondary battery of the present disclosure may include the electrode assembly electrolyte and a battery case.

The electrolyte may be a non-aqueous lithium electrolyte comprising a non-aqueous organic solvent and a lithium salt, or may be a flame retardant electrolyte including a flame retardant solvent and a lithium.

As the non-aqueous organic solvent of the non-aqueous lithium electrolyte, for example, an aprotic organic solvent, such as N-methyl-2-pyrrolidinone, propylene carbonate, ethylene carbonate, butylene carbonate, dimethyl carbonate, diethyl carbonate, ethylmethyl carbonate, gamma-butylolactone, 1,2-dimethoxy ethane, 1,2-diethoxy ethane, tetrahydrofuran, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl pyropionate, ethyl propionate, and the like can be used.

However, in the case of non-aqueous lithium electrolyte containing such a non-aqueous organic solvent, it is a flammable solvent that volatilizes easily and catches fire easily, which may cause battery safety issues. Thus, the electrolyte may particularly be a flame-retardant electrolyte.

The flame retardant electrolyte may be an electrolyte that does not volatilize easily and does not catch fire. As a result, when the flame retardant electrolyte is applied to a lithium secondary battery, high-temperature safety of the battery can be ensured.

However, the flame retardant electrolyte has a problem of lowering an impregnability of a separator for a lithium secondary battery (e.g., a polyolefin-based separator), however, the impregnability of the flame retardant electrolyte is increased by the coating layer according to the present disclosure, and therefore, it is possible to use the flame retardant electrolyte.

Here, the flame retardant can serve as a medium through which ions involved in the electrochemical reaction of the battery can move. For example, the flame retardant solvent may include one or more compound selected from a sulfone-based compound, a nitrile-based compound, a phosphoric acid-based compound, and a fluorine-substituted carbonate-based compound.

The sulfone-based compound may be a cyclic sulfone-based compound or a linear sulfone-based compound, and specifically, may include one or more compound selected from the group consisting of sulfolane, tetramethylene sulfone, dibutyl sulfone, ethylvinyl sulfone, methylpropyl sulfone, ethyl-i-propyl sulfone, ethyl-i-butyl sulfone, i-propyl-i-butyl sulfone, i-propyl-s-butyl sulfone, and butyl-i-butyl sulfone.

The nitrile-based compound may include one or more compound selected from the group consisting of acetonitrile, succinonitrile, adiponitrile, malononitrile, glutaronitrile, suberonitrile and sebaconitrile.

The phosphoric acid-based compound may include one or more compound selected from the group consisting of dimethyl methylphosphate, trimethyl phosphate, triethyl phosphate, tributyl phosphate, diethyl ethyl phosphate, dimethyl methyl phosphate, dimethyl(2-methoxyethoxy)methylphosphonate, diethyl(2-methoxyethoxy)methylphosphonate, and triphenyl phosphate.

The fluorine-substituted carbonate-based compound may include one or more compound selected from the group consisting of bis(2,2,3,3-tetrafluoro-propyl)carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, 2,2,2-trifluoroethyl-N,N-dimethyl carbonate, hexafluoro-i-propyl-N,N-dimethyl carbonate, 4-(2,2,3,3-tetrafluoropropoxymethyl)-[1,3]-dioxolan-2-one, and bis(2,2,3,3-pentafluoro-propyl)carbonate.

The lithium salt is used as a medium for transferring ions in a lithium secondary battery. The lithium salt may include, for example, Li⁺ as a cation, and may comprise one or more selected from the group consisting of F⁻, Cl⁻, Br⁻, I⁻, NO3⁻, N(CN)2⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻ as an anion.

Specifically, the lithium salt may include a single substance or a mixture of two or more selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI(lithium bis(perfluoroethanesulfonyl) imide, LiN(SO₂CF₂CF₃)₂ and LiTFSI (lithium bis(trifluoromethanesulfonyl) imide, LiN(SO₂CF₃)₂), however, it is preferable to include LiN(SO₂CF₃)₂ from the viewpoint of excellent stability.

In addition to these, the lithium salt commonly used in an electrolyte of a lithium secondary battery can be used without particular limitation

The concentration of the lithium salt can be appropriately changed within a generally usable range, but the lithium salt may be included in the electrolyte at a concentration of 1 M to 3 M, specifically at a concentration of 1 M to 2.5 M, and more specifically at a concentration of 1 M to 2 M in the electrolyte in order to obtain an optimal effect of forming a film for preventing corrosion on the electrode surface. When the concentration of the lithium salt satisfies the above range, the effect of improving the cycle characteristics of the lithium secondary battery during high-temperature storage is sufficient, the viscosity of the flame retardant electrolyte is appropriate, so that the impregnation properties of the flame retardant electrolyte can be improved.

Further, in order to improve charge/discharge characteristics, flame retardancy, and the like, in the electrolyte, pyridine, for example, triethyl phosphite, triethanolamine, cyclic ether, ethylene diamine, n-glyme, hexaphosphate triamide, a nitrobenzene derivatives, sulfur, a quinone imine dye, N-substituted oxazolidinone, N,N-substituted imidazolidine, ethylene glycol dialkyl ether, ammonium salt, pyrrole, 2-methoxyethanol, aluminum trichloride, and the like may also be added. In some cases, halogen-containing solvents such as carbon tetrachloride and ethylene trifluoride may be further included in order to impart incombustibility, carbon dioxide gas may be further included in order to improve high-temperature preservation characteristics, and FEC (Fluoro-Ethylene Carbonate), PRS (Propene sultone), and the like may be further included.

The lithium secondary battery of the present disclosure can be manufactured by incorporating the electrode assembly together with the electrolyte in a battery case.

The battery case may be one commonly used in the field, and the external shape depending on the purpose of the battery is not limited, and for example, may be a cylindrical shape, a prismatic shape, a pouch shape, or a coin shape, but is not limited thereto.

The lithium secondary battery according to another embodiment of the present disclosure can be used not only as a battery cell used as a power source for a small-sized device, but also preferably as a unit battery for a medium- or large-sized battery module including a plurality of battery cells. Preferable examples of the medium-sized or large-sized device include an electric vehicle, a hybrid electric vehicle, a plug-in hybrid electric vehicle, and an energy storage system(ESS).

Hereinafter, the present disclosure will be described in more detail with reference to specific examples. However, the following examples are only exemplary embodiments for facilitating understanding of the invention, and are not intended to limit the scope of the invention. It would be obvious to those of ordinary skill in the art that various changes and modifications can be made to the invention without departing from the scope and spirit of the present disclosure, and it goes without saying that these changes and modifications fall within the scope of the appended claims.

### <Example 1>

### Preparation of composition for forming coating layer

Li_{1.3}Al_{0.3}Ti_{1.7}(PO₄)₃ (D50: 0.6 micrometer), boehmite(D50: 0.35 micrometer, zeta potential: 35 mV), poly methyl methacrylate (PMMA) polymer particles (D50: 1 micrometer, zeta potential: -50 mV), hydrogenated nitrile rubber (H-NBR), and polyvinylidene fluoride (PVDF) were put and dispersed at a weight ratio of 60:10:10:5:15 in N-methyl-2-pyrrolidone (NMP) solvent to prepare a composition for forming a coating layer.

The D₅₀ of the particles was measured from the value of the particle size at the point which the cumulative volume reaches 50% by using a laser diffraction method, and the zeta potential value was measured by an electrophoretic light scattering method using a dynamic light scattering device.

### Manufacture of Negative Electrode

Next, a copper (Cu) metal thin film with a thickness of 20 micrometers was prepared as a negative electrode current collector, and graphite as a negative electrode active material, carbon black as a conductive material, carboxymethylcellulose(CMC) as a thickener and PVDF as a binder were put and dispersed at a weight ratio of 95 : 1 : 1.5 : 2.5 in water, and the prepared negative electrode slurry was coated, dried and rolled on one side of the copper metal thin film to a thickness of 75 micrometers, thereby manufacturing a negative electrode.

### Manufacture of Positive Electrode

An aluminum(Al) metal thin film with a thickness of 15 micrometers was prepared as a positive electrode current collector, and Li(Ni_{0.8}Mn_{0.1}Co_{0.1})O₂ as the positive electrode active material, carbon nanotube as the conductive material, and PVDF as the binder were put and dispersed at a weight ratio of 96 : 1 : 3 in NMP solvent, and the prepared positive electrode slurry was coated, dried and rolled on one side of the aluminum metal thin film to a thickness of 60 micrometers, thereby manufacturing a positive electrode.

### Manufacture of Electrode Assembly

The composition for forming a coating layer was coated on the negative electrode active material layer of the negative electrode to a thickness of 30 micrometers, and dried to form a coating layer.

Subsequently, an electrode assembly was manufactured by arranging such that the coating layer and the positive electrode active material layer of the positive electrode were in contact with each other, as shown in FIG. 1.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Example 2>

A composition for forming a coating layer, a positive electrode, and a negative electrode were manufactured in the same manner as in Example 1.

### Manufacture of Electrode Assembly

The composition for forming a coating layer was coated on the negative electrode active material layer of the negative electrode to a thickness of 20 micrometers, and dried to form a coating layer.

The composition for forming a coating layer was coated on the positive electrode active material layer of the positive electrode to a thickness of 20 micrometers, and dried to form a coating layer.

Subsequently, an electrode assembly was manufactured by arranging such that the coating layer of the negative electrode and the coating layer of the positive electrode were in contact with each other, as shown in FIG. 4.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Example 3>

A composition for forming a coating layer, a positive electrode, and a negative electrode were manufactured in the same manner as in Example 1.

### Manufacture of Electrode Assembly

The composition for forming a coating layer was coated on the positive electrode active material layer of the positive electrode to a thickness of 20 micrometers, and dried to form a coating layer.

Subsequently, the coating layer of the positive electrode and the negative electrode active material layer of the negative electrode were set to face each other, and a separator made of polyolefin (thickness: 15 micrometers) was arranged to insert between them as shown in FIG. 3 to manufacture an electrode assembly.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Example 4>

An electrode assembly and a lithium secondary battery were manufactured in the same manner as in Example 3, except that in Example 3, an electrolyte in which LiPF6 was dissolved to 1M in an organic solvent (ethylene carbonate: ethylmethyl carbonate = 30:70 volume ratio) was used when manufacturing the lithium secondary battery.

### <Example 5>

A composition for forming a coating layer, a positive electrode, and a negative electrode were manufactured in the same manner as in Example 1.

### Manufacture of Electrode Assembly

The composition for forming a coating layer was coated on both sides of a polyolefin separator (thickness: 10 micrometers) to a thickness of 10 micrometers, and dried to form a coating layer.

Subsequently, an electrode assembly was manufactured by arranging such that the coating layer, the positive electrode active material layer of the positive electrode, and the negative electrode active material layer of the negative electrode were in contact with each other, as shown in FIG. 6.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Example 6>

### Preparation of composition for forming coating layer

Li_{1.3}Al_{0.3}Ti_{1.7}(PO₄)₃ (D50: 0.6 micrometer), boehmite(D50: 0.35 micrometer, zeta potential: 35 mV), and polyvinylidene fluoride(PVDF) were put and dispersed at a weight ratio of 60:25:15 in N-methyl-2-pyrrolidone (NMP) solvent to prepare a composition for forming a coating layer.

An electrode assembly and a lithium secondary battery were manufactured in the same manner as in Example 1, except that the composition for forming the coating layer was used.

### <Example 7>

### Preparation of composition for forming coating layer

Li_{1.3}Al_{0.3}Ti_{1.7}(PO₄)₃ (D50: 0.6 micrometer), polymethyl methacrylate (PMMA) polymer particles (D50: 1 micrometer, zeta potential: -50 mV), hydrogenated nitrile rubber (H-NBR) and polyvinylidene fluoride (PVDF) were put and dispersed at a weight ratio of 60 : 20 : 5 : 15 in N-methyl-2-pyrrolidone (NMP) solvent to prepare a composition for forming a coating layer.

An electrode assembly and a lithium secondary battery were manufactured in the same manner as in Example 1, except that the composition for forming the coating layer was used.

### <Example 8>

### Preparation of composition for forming coating layer

Li_{1.3}Al_{0.3}Ti_{1.7}(PO₄)₃ (D50: 0.6 micrometer), boehmite (D50: 0.35 micrometer, zeta potential: 35 mV), polymethyl methacrylate (PMMA) polymer particles (D50: 1 micrometer, zeta potential: -50 mV), hydrogenated nitrile rubber (H-NBR) and polyvinylidene fluoride(PVDF) were put and dispersed at a weight ratio of 10 : 60 : 10 : 5 : 15 in N-methyl-2-pyrrolidone(NMP) solvent to prepare a composition for forming a coating layer.

An electrode assembly and a lithium secondary battery were manufactured in the same manner as in Example 1, except that the composition for forming the coating layer was used.

### <Comparative Example 1>

A positive electrode, and a negative electrode were manufactured in the same manner as in Example 1.

### Manufacture of Electrode Assembly

The positive electrode active material layer of the positive electrode was set to face the negative electrode active material layer of the negative electrode, and a separator made of polyolefin (thickness: 15 micrometers) was arranged to insert between them. The electrode assembly was manufactured as in the electrode assembly of a general lithium secondary battery.

### Manufacture of Lithium Secondary Battery

The electrode assembly was impregnated with an electrolyte in which LiPF₆ was dissolved to 1M in an organic solvent (ethylene carbonate: ethylmethyl carbonate = 30:70 volume ratio), and incorporated in a battery case to manufacture a lithium secondary battery.

### <Comparative Example 2>

An electrode assembly and a lithium secondary battery were manufactured in the same manner as in Comparative Example 1, except that in Comparative Example 1, an electrolyte in which LiN(SO₂CF₃)₂(LiFSI) was dissolved to 1.5M in the flame retardant solvent sulfolane was used when manufacturing the lithium secondary battery.

### <Comparative Example 3>

A positive electrode and a negative electrode were manufactured in the same manner as in Example 1.

### Preparation of composition for forming coating layer

Al₂O₃ (D50: 1 micrometer, zeta potential: -20mV), and polyvinylidene fluoride(PVDF) were put and dispersed at a weight ratio of 85:15 in NMP solvent to prepare a composition for forming a coating layer.

### Manufacture of Electrode Assembly

The composition for forming a coating layer was coated on the negative electrode active material layer of the negative electrode to a thickness of 20 micrometers, and dried to form a coating layer.

The composition for forming a coating layer was coated on the positive electrode active material layer of the positive electrode to a thickness of 20 micrometers, and dried to form a coating layer.

Subsequently, an electrode assembly was manufactured by arranging such that the coating layer of the negative electrode and the coating layer of the positive electrode were in contact with each other.

### Manufacture of Lithium Secondary Battery

The electrode assembly was impregnated with an electrolyte in which LiN(SO₂CF₃)₂(LiFSI) was dissolved to 1.5M in the flame retardant solvent sulfolane, and incorporated in a battery case to manufacture a lithium secondary battery.

### <Comparative Example 4>

Boehmite (D50: 0.35 micrometer, zeta potential: 35 mV), Al₂O₃ (D50: 1 micrometer, zeta potential: -20mV) and polyvinylidene fluoride (PVDF) were put and dispersed at a weight ratio of 10:75:15 in N-methyl-2-pyrrolidone (NMP) solvent to prepare a composition for forming a coating layer.

An electrode assembly and a lithium secondary battery were manufactured in the same manner as in Example 1, except that the composition for forming a coating layer was used.

### <Experimental Example 1>

A hot box test was performed on the lithium secondary batteries of Examples 1 to 5 and Comparative Examples 1 to 2.

The hotbox test was performed in such a way to raise temperature at 5°C/min from 25°C, and hold the temperature at 100°C, 120°C, 140°C, 150°C, 160°C, 170°C and 180°C for 30 minutes each, and then raise the temperature at 2°C/min up to 200°C.

And, the temperature at which ignition started is shown in Table 1 below.

**[Table 1]**

| | Example 1 | Example 2 | Example 3 | Example 4 | Example 5 | Comparative Example 1 | Comparative Example 2 |
|---|---|---|---|---|---|---|---|
| Ignition temperature (°C) | 193 | 194 | 206 | 183 | 188 | 167 | 170 |

Referring to Table 1, it was confirmed that the thermal stability of the lithium secondary battery according to the present disclosure is improved, and that when a flame retardant electrolyte is used, further improved thermal stability can be obtained.

Meanwhile, in the case of hot box tests for thermal stability comparison, as the state of charge of a lithium secondary battery is closer to full charge, the thermal stability is lower, and thus, comparisons must be made under the same fully charge state. However, in the case of the lithium secondary battery of Comparative Example 3, it is not possible to impregnate the electrolyte using a flame retardant solvent from the beginning, which makes it impossible to fully charge the battery, and makes it difficult to compare thermal stability under equivalent conditions. Therefore, this was omitted from the corresponding evaluation results.

### <Experimental Example 2>

The initial capacity and capacity retention rate were measured for each of the lithium secondary batteries manufactured in Examples 1 to 8 and Comparative Examples 1 to 4, and the results are shown in Table 2 below.

Charging each of the respective manufactured lithium secondary batteries at 25°C with a constant current of 0.33C to 4.2V and discharging the batteries with a constant current of 0.33C to 3.0V were set as one cycle, and after 200 cycles of charging and discharging, the capacity retention rate was calculated as the ratio of the capacity after 200 cycles to the initial capacity.

**[Table 2]**

| | Initial capacity (Ah) | Capacity retention rate (%) |
|---|---|---|
| Example 1 | 1.92 | 91 |
| Example 2 | 1.95 | 93 |
| Example 3 | 1.97 | 97 |
| Example 4 | 2.01 | 97 |
| Example 5 | 1.98 | 97 |
| Example 6 | 1.92 | 93 |
| Example 7 | 1.90 | 92 |
| Example 8 | 1.92 | 93 |
| Comparative Example 1 | 2.02 | 97 |
| Comparative Example 2 | 1.98 | 56 |
| Comparative Example 3 | 1.36 | 62 |
| Comparative Example 4 | 1.97 | 77 |

Referring to Table 2, it can be confirmed that the performance of the lithium secondary battery according to the present disclosure is superior to that of Comparative Examples 2 to 4. This is because, when a flame retardant solvent is used, the oxide solid electrolyte particles act as an electrolyte to increase the mobility of lithium ions, thereby enhancing the mobility of the polymer particles and improving the impregnability of the electrolyte.

It will be apparent to those skilled in the art that various modifications and variations can be made in the present disclosure without departing from the spirit and scope of the present disclosure.

### [Industrial Applicability]

The electrode assembly according to the present disclosure is configured such that a coating layer is located between the positive electrode and the negative electrode, and the coating layer includes one or more selected from the group consisting of polymer particles and ceramic particles, along with oxide-based solid electrolyte particles, whereby the insulation between the positive electrode and the negative electrode is effectively maintained by a coating layer that does not easily shrink even in a high temperature environment, which provides the effect of improving high-temperature safety.

In addition, since the coating layer according to the present disclosure itself has electrical insulation properties, not only does it function as a separator, but also when a separator is used together, it prevents shrinkage of the separator, further increases electrical insulation properties, has heat resistance, and is more effective in high temperature safety.

Moreover, the coating layer according to the present disclosure uses oxide-based solid electrolyte particles, and therefore, can serve as an electrolyte between the positive electrode and the negative electrode even if the electrolyte impregnation is slightly low, thereby improving the resistance increase phenomenon of lithium secondary batteries.

In addition, the coating layer according to the present disclosure can exhibit an even more improved effect when it contains polymer particles that can be used as polymer-based solid electrolyte particles along with oxide-based solid electrolyte particles.

Furthermore, when a flame retardant electrolyte is used together as an electrolyte, not only it further improves safety by suppressing ignition, but also the problem of deterioration of electrolyte impregnation that may occur due to flame retardant electrolytes can be solved by the coating layer according to the present disclosure as described above, which has the effect of improving the performance of lithium secondary batteries despite the use of flame retardant electrolytes.

## Claims

1. An electrode assembly comprising:
a positive electrode, a negative electrode, and a coating layer located between the positive electrode and the negative electrode,
wherein the coating layer includes (a) oxide-based solid electrolyte particles, and (b) one or more selected from the group consisting of polymer particles and ceramic particles.

2. The electrode assembly according to claim 1, wherein:
the oxide-based solid electrolyte particles include one, or two or more selected from the group consisting of LLTO-based compound, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compound, LATP-based compound, Li₁₊ₓTi₂₋ₓAlₓSi_{y}(PO₄)_{3-y} (wherein 0≤x≤1, 0≤y≤1), LiAlₓZr₂₋ₓ(PO₄)₃ (wherein 0≤x≤1), LiTiₓZr₂₋ₓ(PO₄)₃(wherein 0≤x≤1), LISICON-based compound, LIPON-based compound, Perovskite-based compound, Nasicon-based compound, LLZO-based compound, and LLZMO-based compound.

3. The electrode assembly according to claim 1, wherein:
the polymer particles and the ceramic particles have an absolute value of zeta potential of 25 mV or more, respectively.

4. The electrode assembly according to claim 1, wherein:
the polymer particles include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

5. The electrode assembly according to claim 1, wherein:
the ceramic particles include one or more selected from the group consisting of boehmite, Al₂O₃, TiO₂, Fe₂O₃, SiO₂, ZrO₂, Co₃O₄, SnO₂, NiO, ZnO, V₂O₅, and MnO.

6. The electrode assembly according to claim 1, wherein:
the oxide-based solid electrolyte particles are included in an amount of 10% by weight to 90% by weight based on the total weight of the coating layer.

7. The electrode assembly according to claim 1, wherein:
the coating layer includes (a) oxide-based solid electrolyte particles, and (b) polymer particles, wherein the polymer particles include one or more selected from the group consisting of polyethylene oxide(PEO), polyphenylene sulfide(PPS), polymethyl(meth)acrylate(PMMA), polystyrene, polyvinyl chloride, polycarbonate, polysulfone, polyethersulfone, polyetherimide, polyphenylsulfone, polyamideimide, polyimide, polybenzimidazole, polyether ketone, polyphthalamide, polybutylene terephthalate, and polyethylene terephthalate.

8. The electrode assembly according to claim 1, wherein:
the coating layer further comprises one or more additive selected from the group consisting of a binder and a dispersant.

9. The electrode assembly according to claim 1, wherein:
the coating layer has a thickness of 3 micrometers to 30 micrometers.

10. The electrode assembly according to claim 1, wherein:
the coating layer is formed on the positive electrode or the negative electrode.

11. The electrode assembly according to claim 10, wherein:
the electrode assembly further comprises a separator, wherein the separator is located between the positive electrode and the coating layer, or between the negative electrode and the coating layer.

12. The electrode assembly according to claim 1, wherein:
the coating layer comprises a first coating layer formed on the positive electrode and a second coating layer formed on the negative electrode.

13. The electrode assembly according to claim 12, wherein:
the electrode assembly further comprises a separator, wherein the separator is located between the first coating layer and the second coating layer.

14. The electrode assembly according to claim 1, wherein:
the electrode assembly further comprises a separator, and the coating layer is formed on one side or both sides of the separator.

15. The electrode assembly according to any of claims 12, 14 and 15, wherein:
the separator is an SRS separator having a structure in which an organic-inorganic mixed layer containing inorganic particles and a binding material is formed on one side or both sides of a base substrate.

16. A lithium secondary battery comprising the electrode assembly according to any one of claims 1 to 15, an electrolyte, and a battery case.

17. The lithium secondary battery according to claim 16, wherein:
the electrolyte is a flame retardant electrolyte that includes a flame retardant solvent and a lithium salt.

18. The lithium secondary battery according to claim 17, wherein:
the flame retardant solvent includes one or more compound selected from a sulfone-based compound, a nitrile-based compound, a phosphoric acid-based compound, and a fluorine-substituted carbonate-based compound.

19. The lithium secondary battery according to claim 17, wherein:
the lithium salt includes LiN(SO₂CF₃)₂.
